(19) Europäisches Patentamt
European Patent Office
Office européen des brevets

(11) **EP 3 767 033 B1**

(12) **EUROPÄISCHE PATENTSCHRIFT**

(45) Veröffentlichungstag und Bekanntmachung des Hinweises auf die Patenterteilung:
**30.11.2022  Patentblatt 2022/48**

(21) Anmeldenummer: **20182305.1**

(22) Anmeldetag: **25.06.2020**

(51) Internationale Patentklassifikation (IPC):
*E01C 23/088* (2006.01)       *E01C 21/00* (2006.01)
*E01C 23/12* (2006.01)        *E21C 25/00* (2006.01)
*E21C 31/02* (2006.01)        *B28D 1/18* (2006.01)
*B28D 7/00* (2006.01)         *B60W 30/14* (2006.01)

(52) Gemeinsame Patentklassifikation (CPC):
**E01C 23/088; B28D 1/18; B28D 7/005;**
**E01C 23/127;** E01C 21/00; E01C 23/12

(54) **SELBSTFAHRENDE BAUMASCHINE UND VERFAHREN ZUM BEARBEITEN VON BODENBELÄGEN**

SELF-PROPELLED CONSTRUCTION MACHINE AND METHOD FOR PROCESSING FLOOR COVERINGS

ENGIN DE CONSTRUCTION AUTOMOTEUR ET PROCÉDÉ DE TRAITEMENT DES REVÊTEMENTS DE SOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2019   DE 102019210644**

(43) Veröffentlichungstag der Anmeldung:
**20.01.2021   Patentblatt 2021/03**

(73) Patentinhaber: **Wirtgen GmbH**
**53578 Windhagen (DE)**

(72) Erfinder:
• **Bach, Markus**
  **53129 Bonn (DE)**
• **Wagner, Stefan**
  **53604 Bad Honnef (DE)**
• **Mahlberg, Axel**
  **53773 Hennef (DE)**
• **Schäfer, Markus**
  **53567 Asbach/Ww. (DE)**
• **Fitz, Eduard**
  **53773 Hennef (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A2- 2 644 775      WO-A1-03/064770**

**Beschreibung**

Die Erfindung betrifft eine selbstfahrende Baumaschine nach dem Oberbegriff des Anspruchs 1, sowie ein Verfahren zum Bearbeiten von Bodenbelägen nach dem Oberbegriff des Anspruchs 10.

Es sind selbstfahrende Baumaschinen bekannt, insbesondere Straßenfräsmaschinen, Recycler, Stabilisierer oder Surface-Miner mit einem Maschinenrahmen, zumindest drei Fahreinrichtungen, zumindest einem hydraulischen Antriebssystem zum Antreiben mindestens zweier Fahreinrichtungen, wobei das hydraulische Antriebssystem zumindest einen regelbaren Hydraulikmotor mit variablem Schluckvolumen und zumindest eine hydraulische Pumpe mit variablem Fördervolumen aufweist und zumindest einer Arbeitseinrichtung, insbesondere einer Fräswalze zum Bearbeiten eines Bodenbelags, wobei eine Detektionseinrichtung vorgesehen ist, die bei Fortbewegung der Baumaschine Schwankungen in der Längsgeschwindigkeit der Baumaschine detektiert.

Mit den Straßenfräsmaschinen können beispielsweise bestehende Bodenbeläge von Straßen abgetragen werden. Mit Recyclern können bestehende Bodenbeläge aufgearbeitet werden. Die Stabilisierer dienen der Vorbereitung des Unterbaus für den Straßenbau. Mit Surface-Minern können Kohle und Gestein abgetragen werden.

Es hat sich jedoch gezeigt, dass es beim Betreiben der Baumaschinen beispielsweise durch einen unruhigen Lauf der Arbeitseinrichtung oder der Fahreinrichtungen zu Vibrationen kommen kann. Dies kann, insbesondere wenn die Vibrationen im Bereich der Resonanzfrequenz des hydraulischen Antriebssystems der Maschine liegen, zu einer Schwingungsanregung der gesamten Baumaschine bis hin zum Aufschaukeln der Maschine führen. Ein solches Aufschaukeln der Maschine wird nach dem bisherigen Stand der Technik dadurch unterbunden, dass der Maschinenführer die Geschwindigkeit der Baumaschine ändert und langsamer fährt. Dies hat jedoch den Nachteil, dass die Maschine nicht mit der gewünschten Geschwindigkeit betrieben wird bzw. fortbewegt werden kann und die Baumaschine dementsprechend nicht optimal ausgelastet wird.

Die WO03064770 offenbart eine Baumaschine, insbesondere zum Bearbeiten von Böden oder zum Abtragen von Verkehrsflächen mit einer Fräswalze, die mit einer Vielzahl von Meisseln bestückt ist, wobei wenigstens einem am Arbeitsprozess direkt oder indirekt beteiligten Maschinenbauteil oder einem sonstigen Maschinenbauteil mindestens eine Signalaufnahmeeinheit zugeordnet ist, und dass die Signalaufnahmeeinheit einen Betriebszustand des Maschinenbauteils erfasst, und dass die Signalaufnahmeeinheit über eine Signalverarbeitungsanordnung an eine Signal-Ausgabeeinrichtung angeschlossen ist.

Die EP 2 644 775 A2 offenbart eine selbstfahrende Fräsmaschine, insbesondere Straßenfräsmaschine, Stabilisierer, Recycler oder Surface Miner zum Bearbeiten von Straßen- oder Bodenoberflächen, mit einem Fahrwerk mit in Fahrtrichtung vorderen und hinteren Fahrwerksachsen mit insgesamt mindestens drei Laufwerken, mit einem von dem Fahrwerk getragenen Maschinenrahmen, mit Hubsäulen zwischen den Laufwerken und dem Maschinenrahmen an zumindest zwei in Fahrtrichtung quer zueinander versetzten Laufwerken einer Fahrwerksachse, und mit einer Arbeitswalze, wobei die Arbeitswalze in eine Position für den Fahrbetrieb mit angehobener Arbeitswalze verstellbar ist und die Hubsäulen in der eingestellten Position der Arbeitswalze mit Abstand von der Straßen- oder Bodenoberfläche mit einer Federeinrichtung koppelbar sind.

Der Erfindung liegt die Aufgabe zugrunde, eine Baumaschine und ein Verfahren zum Bearbeiten von Bodenbelägen zu schaffen, bei der bzw. bei dem ein Aufschaukeln der Baumaschine vermieden wird bzw. ein optimierter Betrieb der Baumaschine ermöglicht wird.

Zur Lösung dieser Aufgabe dienen die Merkmale der Ansprüche 1 und 10.

Die Erfindung sieht in vorteilhafter Weise vor, dass in Abhängigkeit der detektierten Schwankung eine Steuerungseinheit das Schluckvolumen des zumindest einen regelbaren Hydraulikmotors verändert, so dass die Eigenfrequenz bzw. Resonanzfrequenz des hydraulischen Antriebssystems der Baumaschine verändert wird, wobei die Steuerungseinheit abhängig von der Höhe der Verstellung des Schluckvolumens ein Fördervolumen der Pumpe derart anpasst, dass eine vorgegebene Antriebsgeschwindigkeit konstant bleibt.

Die vorliegende Erfindung hat den Vorteil, dass durch Verstellung des Schluckvolumens des regelbaren Hydraulikmotors ein Aufschaukeln der Maschine vermieden wird, da die Eigenfrequenz des hydraulischen Antriebssystems verändert wird. Ferner bleibt die vorgegebene Antriebsgeschwindigkeit dadurch konstant, dass das Fördervolumen der Pumpe entsprechend der Verstellung des Schluckvolumens des zumindest einen Hydraulikmotors angepasst wird.

Es ist somit nicht mehr nötig, die eingestellte Geschwindigkeit der Baumaschine zu reduzieren und die Baumaschine kann in der gewünschten eingestellten Geschwindigkeit betrieben werden.

Bei der vorliegenden Erfindung werden vorzugsweise mindestens zwei Fahreinrichtungen angetrieben. Es können jedoch auch lediglich zwei Fahreinrichtungen angetrieben sein und zusätzlich können weitere nicht angetriebene Fahreinrichtungen vorgesehen sein.

Das hydraulische Antriebssystem weist zumindest eine hydraulische Pumpe auf. Ferner ist zumindest ein regelbarer Hydraulikmotor vorgesehen. Vorzugsweise ist an jeder Fahreinrichtung ein regelbarer Hydraulikmotor vorgesehen. Bei dem regelbaren Hydraulikmotor kann das Schluckvolumen variabel eingestellt werden.

Außerdem kann das Fördervolumen der hydraulischen Pumpe einstellbar sein.

Es ist vorzugsweise ein Tank für die hydraulische Flüssigkeit vorgesehen. Die hydraulische Pumpe fördert Hydraulikflüssigkeit aus dem Tank über hydraulische Leitungen zu den Hydraulikmotoren. Die Hydraulikmotoren treiben die Fahreinrichtungen an.

Die Eigenfrequenz bzw. Resonanzfrequenz $\omega_0$ des hydraulischen Antriebssystems der Baumaschine ist die folgende:

$$\omega_0 = \frac{V_M}{2\pi} \frac{1}{\sqrt{C'_h J_{ges}}}$$

Dabei ist $C'_h$ die hydraulische Kapazität, $J_{ges}$ das an den Hydraulikmotoren wirksame Massenträgheitsmoment der Straßenfräse, $V_M$ das Gesamt-Schluckvolumen der hydraulischen Motoren.

Durch Verstellen des Schluckvolumens am zumindest einen Hydraulikmotor kann somit die Eigenfrequenz des hydraulischen Antriebssystems verstellt werden.

Eine Verstellung des Schluckvolumens an dem zumindest einen Hydraulikmotor würde jedoch bei gleichbleibender Durchflussmenge zu einer veränderten Drehzahl am Hydraulikmotor führen. Daher wird abhängig von der Höhe der Verstellung des Schluckvolumens das Fördervolumen der Pumpe derart angepasst, dass die vorgegebene Antriebsgeschwindigkeit konstant bleibt.

Die Hydraulikmotoren werden vorzugsweise in Betrieb maximal ausgeschwenkt betrieben.

Sofern die Detektionseinrichtung Schwankungen in der Längsgeschwindigkeit der Baumaschine detektiert, wird das Schluckvolumen des wenigstens einen Hydraulikmotors verändert. Bei einem maximal ausgeschwenkten Hydraulikmotor wird das Schluckvolumen verringert.

Gleichzeitig oder kurz danach wird das Fördervolumen der Hydraulikpumpe verändert, da sich sonst eine Veränderung der Drehzahl im Hydraulikmotor ergeben würde. Bei einem verringertem Schluckvolumen am Hydraulikmotor, würde auch das Fördervolumen reduziert werden, da ansonsten ein kleineres Schluckvolumen bei gleicher Durchflussmenge eine höhere Drehzahl bedeuten würde.

Es kann auch eine Drucküberwachung bzw. -begrenzung durchgeführt werden. Durch das Zurückschwenken der Hydraulikmotoren steigt das Druckniveau im System an. Falls es dabei zu einer Überschreitung eines vorgegebenen zulässigen Maximaldrucks des Systems kommt, kann das Schluckvolumen der Motoren wieder erhöht werden um den Hydraulikdruck im System zu verringern, hierdurch kann es jedoch wieder zum Auftreten der unerwünschten Schwingungen kommen. Alternativ kann zur Reduzierung des Hydraulikdrucks die Fördermenge der Hydraulikpumpen reduziert werden, dies führt jedoch zu einer Verringerung der Längsgeschwindigkeit der Baumaschine.

Die Steuerungseinheit kann zum Verändern der Eigenfrequenz der Baumaschine das Schluckvolumen des zumindest einen regelbaren Hydraulikmotors vorzugsweise reduzieren.

Die Schwankungen in der Längsgeschwindigkeit der Baumaschine können mittels der Detektionseinrichtung als Schwingung detektierbar sein, wobei die Schwingung vorzugsweise eine im Wesentlichen feste Frequenz aufweist.

Die Steuerungseinheit kann das hydraulische Antriebssystem derart steuern, dass das Schluckvolumen des zumindest einen Hydraulikmotors und das Fördervolumen der hydraulischen Pumpe gleichzeitig angepasst werden. Alternativ können diese auch nacheinander angepasst werden.

In der vorliegenden Erfindung ist zu unterscheiden zwischen der Längsgeschwindigkeit der Baumaschine, der eingestellten Geschwindigkeit und der vorgegebenen Antriebsgeschwindigkeit. Die Längsgeschwindigkeit ist die tatsächliche Geschwindigkeit der Baumaschine. Die eingestellte Geschwindigkeit ist die Geschwindigkeit, die der Bediener der Baumaschine an der Bedieneinheit einstellen kann. Davon zu unterscheiden ist die vorgegebene Antriebsgeschwindigkeit in dem hydraulischen Antriebssystem. Dies ist die von der Steuereinheit vorgegebene Antriebsgeschwindigkeit. Die Längsgeschwindigkeit der Baumaschine ist eine Überlagerung der vorgegebenen Antriebsgeschwindigkeit und Einflussfaktoren der Maschine oder der Umgebung. So kann die vorgegebene Antriebsgeschwindigkeit durch Schwankungen, die beispielsweise durch einen unruhigen Lauf der Arbeitseinrichtung hervorgerufen werden, überlagert werden. Die vorgegebene Antriebsgeschwindigkeit ist die Geschwindigkeit, die sich bei gegebenen Betriebsparametern des hydraulischen Antriebssystems und ohne jegliche Einflussfaktoren einstellen würde.

Bei reduziertem Schluckvolumen und gleichzeitig reduziertem Fördervolumen ergibt sich im hydraulischen Antriebssystem ein höherer Druck, der bei einem idealen System auch zu einer gleichbleibenden Geschwindigkeit führen würde. Bei einem nicht idealen System kann es jedoch zu Verlusten kommen, z.B. kann es aufgrund des höheren Drucks auch zu Verlusten aufgrund von Leckagen kommen.

Die Geschwindigkeit könnte daher, trotz gleichbleibender Volumenverhältnisse von Pumpe und Motor, reduziert werden.

Die Steuerungseinheit kann überprüfen, ob die detektierte Längsgeschwindigkeit von der vorgegebenen Antriebsgeschwindigkeit abweicht und die Steuerungseinheit kann bei Abweichung der detektierten Längsgeschwindigkeit von der vorgegebenen Antriebsgeschwindigkeit das Fördervolumen der hydraulischen Pumpe derart anpassen bis die detektierte Längsgeschwindigkeit der vorgegebenen Antriebsgeschwindigkeit entspricht.

Das Fördervolumen kann somit nicht nur abhängig von der Höhe der Verstellung des Schluckvolumens, sondern auch von der tatsächlich detektierten Fahrgeschwindigkeit angepasst werden, so dass die Längsgeschwindigkeit der vorgegebenen Antriebsgeschwindigkeit entspricht.

Alternativ können in einer Datenspeichereinrichtung Daten oder Kennlinien gespeichert sein, die den Zusammenhang zwischen Druck im hydraulischen Antriebssystem und Geschwindigkeitsverlusten darstellen, wobei eine Druckdetektionseinrichtung den Druck im hydraulischen Antriebssystem detektiert, und wobei die Steuerungseinheit abhängig von dem detektiert Druck das Fördervolumen der hydraulischen Pumpe derart anpasst, dass die Geschwindigkeitsverluste ausgeglichen werden und die Längsgeschwindigkeit der vorgegebenen Antriebsgeschwindigkeit entspricht. Als weitere Alternative kann auch ein Kennfeld hinterlegt sein, der den Zusammenhang zwischen Geschwindigkeit, Fördervolumen der Pumpe, Schluckvolumen der Hydraulikmotoren und Geschwindigkeitsverlusten wiederspielt. In diesem Fall können die Geschwindigkeitsverluste auch ohne zusätzliche Detektion bestimmt werden, da Geschwindigkeit, das Fördervolumen und die Schluckvolumen bekannt sind. Die Steuerungseinheit kann somit abhängig von dem hinterlegten Kennfeld das Fördervolumen der hydraulischen Pumpe derart anpassen, dass die Geschwindigkeitsverluste ausgeglichen werden und die Längsgeschwindigkeit der vorgegebenen Antriebsgeschwindigkeit entspricht.

Somit kann die Regelung der Fahrgeschwindigkeit auch anhand von hinterlegten Daten oder anhand einer hinterlegten Kennlinie erfolgen, die den Zusammenhang zwischen Fahrdruck und Geschwindigkeitsverlusten angibt. Das Fördervolumen kann dann entsprechend angepasst werden.

Unter Geschwindigkeitsverlusten sind Verluste aufgrund von Leckagen oder Ähnlichem zu verstehen und bedeutet, dass die vorgegebene Antriebsgeschwindigkeit nicht tatsächlich erreicht wird und die Längsgeschwindigkeit eine andere ist. Die Geschwindigkeitsverluste sind die Differenz zwischen der vorgegebenen Antriebsgeschwindigkeit und der tatsächlichen Längsgeschwindigkeit. Aufgrund der hinterlegten Daten bzw. Kennlinien sind bei einem System bekannt, wie hoch die Geschwindigkeitsverluste bei einem bestimmten Druck sind. Diese können beispielsweise durch Testversuche ermittelt werden und als Kennlinien oder Daten in einer Datenspeichereinrichtung hinterlegt sein.

Die Steuerungseinheit kann das hydraulische Antriebssystem derart steuern, dass das Schluckvolumen des zumindest einen regelbaren Hydraulikmotors erst dann verändert wird, wenn die detektierte Schwingung eine vorgegebene Amplitude überschreitet.

Die Detektionseinrichtung kann Schwankungen der Längsgeschwindigkeit an den Fahreinrichtungen oder an dem Maschinenrahmen und/oder als Schwankungen des Volumenstroms und/oder Schwankungen des Drucks des hydraulischen Antriebssystems detektieren.

Die Detektionseinrichtung, die die Längsgeschwindigkeit detektiert, kann ein Pickup-Sensor und/oder ein Beschleunigungsaufnehmer zur Messung der Geschwindigkeitsänderungen und/oder eine Messeinrichtung zum Messen der Druckschwankungen oder des Volumenstroms im hydraulischen Antriebssystem umfassen. Gemäß der vorliegenden Erfindung kann ferner ein Verfahren zum Bearbeiten von Bodenbelägen mit einer mit Hilfe von zumindest drei Fahreinrichtungen selbstfahrenden Baumaschine, insbesondere Straßenfräsmaschine, Recycler, Stabilisierer oder Surface-Miner sein, bei der mindestens zwei Fahreinrichtungen von zumindest einem hydraulischen Antriebssystem angetrieben werden, wobei das hydraulische Antriebssystem zumindest einen regelbaren Hydraulikmotor mit variablen Schluckvolumen und zumindest eine hydraulische Pumpe aufweist, wobei eine Arbeitseinrichtung, insbesondere eine Fräswalze, den Bodenbelag bearbeitet, wobei bei einer Fortbewegung der Baumaschine, Schwankungen in der Längsgeschwindigkeit der Baumaschine mittels einer Detektionseinrichtung detektiert werden, wobei in Abhängigkeit der detektierten Schwankungen das Schluckvolumen des zumindest einen regelbaren Hydraulikmotors derart mittels einer Steuerungseinheit verändert wird, dass die Eigenfrequenz des hydraulischen Antriebssystems der Baumaschine verändert wird, wobei abhängig von der Höhe der Verstellung des Schluckvolumens das Fördervolumen der Pumpe derart mittels einer Steuerungseinheit angepasst wird, dass die vorgegebene Antriebsgeschwindigkeit konstant bleibt.

Die Schwankungen in der Längsgeschwindigkeit der Baumaschine können als Schwingungen detektiert werden, wobei diese Schwingungen vorzugsweise eine im Wesentlichen feste Frequenz aufweisen.

Zum Verändern der Eigenfrequenz der Baumaschine kann das Schluckvolumen des zumindest einen regelbaren Hydraulikmotors reduziert werden.

Das Schluckvolumen des zumindest einen Hydraulikmotors und das Fördervolumen der hydraulischen Pumpe können gleichzeitig angepasst werden.

Nach der Anpassung des Schluckvolumens und des Fördervolumens kann überprüft werden, ob die detektierte Längsgeschwindigkeit von der vorgegebenen Antriebsgeschwindigkeit abweicht und bei Abweichung das Fördervolumen der hydraulischen Pumpe derart angepasst werden, bis die detektierte Längsgeschwindigkeit der vorgegebenen Antriebsgeschwindigkeit entspricht.

Alternativ kann nach der Anpassung des Schluckvolumens und des Fördervolumens der Druck im hydraulischen Antriebssystem überprüft werden und abhängig von dem Druck und in einer Datenspeichereinrichtung hinterlegten Daten, die den Zusammenhang zwischen Druck und dem hydraulischen Antriebssystem und Geschwindigkeitsverlusten darstellen, das Fördervolumen derart angepasst werden, dass die Geschwindigkeitsverluste ausgeglichen werden.

Durch Ausgleichen der Geschwindigkeitsverluste entspricht dann die tatsächliche Längsgeschwindigkeit der vorgegebenen Antriebsgeschwindigkeit.

Im Folgenden werden unter Bezugnahme auf die Zeichnungen Ausführungsbeispiele der Erfindung näher erläutert:

Es zeigen schematisch:

Fig. 1 eine selbstfahrende Baumaschine in Seitenansicht,

Fig. 2 Antriebsstränge der Baumaschine, und

Fig. 3 Schwingung der detektierten Längsgeschwindigkeit.

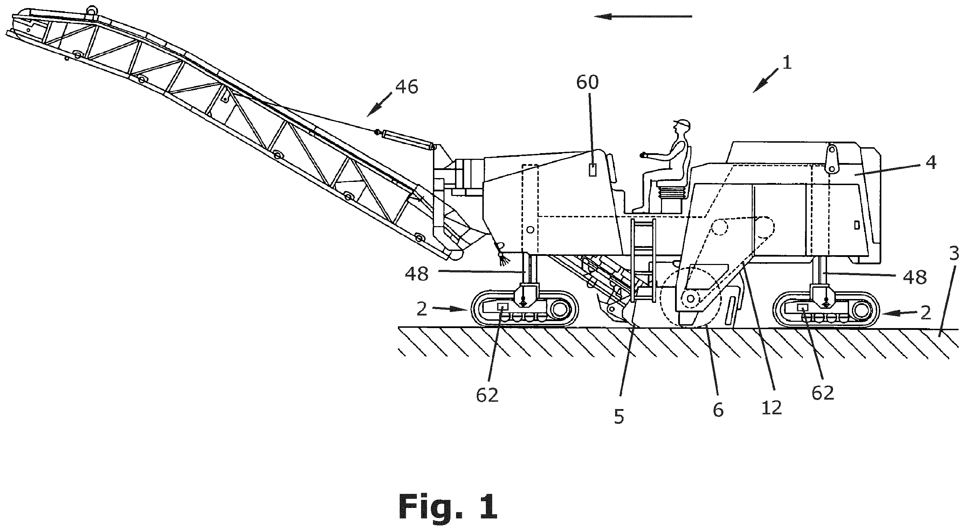

Fig. 1 zeigt eine Baumaschine 1. Die Baumaschine 1 kann eine Fräsmaschine, insbesondere eine Straßenfräsmaschine, ein Recycler oder Stabilisierer, oder ein Surface-Miner sein. Die in Fig. 1 dargestellte Baumaschine hat die Form einer Straßenfräsmaschine. Die Baumaschine 1 kann jedoch auch jegliche andere Baumaschine mit zumindest einem hydraulischen Antriebssystem und einer Arbeitseinrichtung sein. Die dargestellte Baumaschine 1 weist Fahreinrichtungen 2 auf, die einen Maschinenrahmen 4 tragen. Die Fahreinrichtungen 2 können Kettenlaufwerke oder Räder sein. An dem Maschinenrahmen 4 ist eine Arbeitseinrichtung, vorzugsweise eine Fräswalze 6, zum Bearbeiten des Bodenbelags 3 gelagert. Die Fräswalze 6 kann zum Bearbeiten des Bodenbelags nicht dargestellte Fräsmeißel an der Mantelfläche der Fräswalze 6 aufweisen. Um die Fräswalze 6 herum ist ein Fräswalzengehäuse 5 angeordnet. Die Baumaschine 1 weist ferner vorzugsweise eine Fördereinrichtung 46 zum Abtransport des Fräsguts auf. Im dargestellten Ausführungsbeispiel ist die Fördereinrichtung 46 ein Transportband.

Die Fahreinrichtungen 2 können über Hubsäulen 48 mit dem Maschinenrahmen 4 verbunden sein. Mittels der Hubsäulen 48 kann der Maschinenrahmen 4 höhenverstellbar sein. Dadurch kann auch die Fräswalze 6 höhenverstellt werden. Alternativ oder zusätzlich kann die Fräswalze 6 wiederum relativ zu dem Maschinenrahmen 4 beweglich, insbesondere höhenverstellbar gelagert sein. Die Hubsäulen 48 können an allen Fahreinrichtungen 2 vorgesehen sein. Die Hubeinrichtungen 48 können jedoch auch beispielsweise lediglich an den hinteren Fahrwerken angeordnet sein.

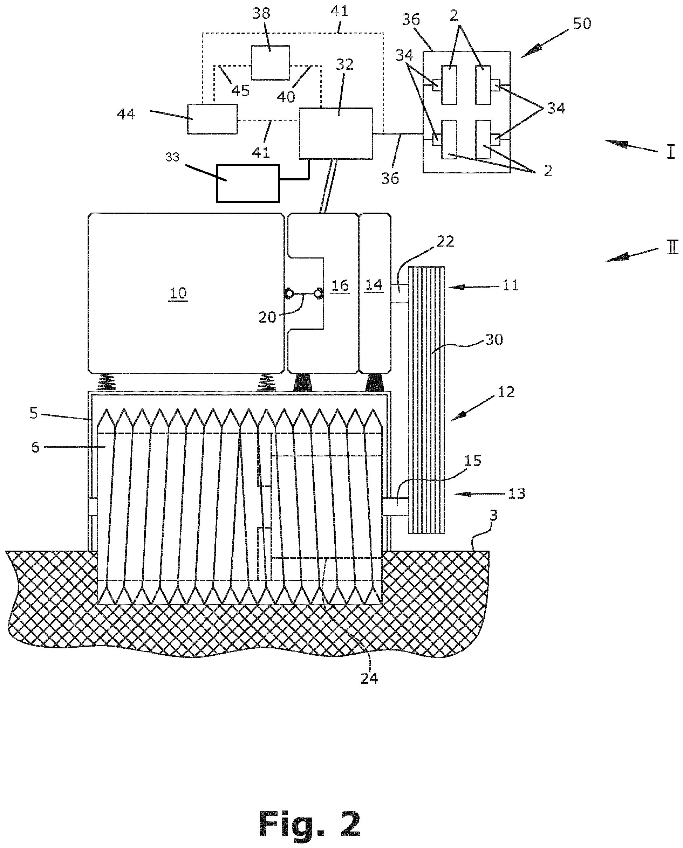

Fig. 2 zeigt einen Antriebsstrang der Baumaschine 1. Zur Übertragung der Antriebsleistung auf die Fahreinrichtungen 2 dient ein erster Antriebsstrang I, während zur Übertragung der Antriebsleistung auf die Fräswalze 6 ein zweiter Antriebsstrang II dient.

Fig. 2 zeigt eine Antriebseinheit 10. Dies kann vorzugsweise ein Verbrennungsmotor sein. Der Verbrennungsmotor kann insbesondere ein Dieselmotor sein. Die Antriebseinheit kann über eine Elastomerkupplung 20 mit einem Pumpenverteilgetriebe 16 zum Antreiben des ersten Antriebsstrangs I zum Antreiben eines hydraulischen Antriebssystems 50 zum Antreiben unter anderem der Fahreinrichtungen 2 vorgesehen sein.

Im zweiten Antriebsstrang II zum Antreiben der Fräswalze 6 kann zwischen der Antriebseinheit 10 und der Fräswalze 6 eine Schaltkupplung 14 vorgesehen sein. Die Schaltkupplung 14 ist eine Einrichtung zum Schalten des Drehmoments.

Zwischen der Schaltkupplung 14 und der Fräswalze 6 kann ein Zugmittelgetriebe 12 für den mechanischen Antrieb der Fräswalze 6 angeordnet sein. Das Zugmittelgetriebe 12 weist ein Antriebselement 11 auf, das mit der Antriebswelle 22 der Antriebseinheit 10 drehfest gekoppelt ist. Ferner weist das Zugmittelgetriebe 12 ein Antriebselement 13 auf, das mit der Antriebswelle 15 der Fräswalze 6 drehfest gekoppelt ist. Zwischen Antriebswelle 15 und der Fräswalze 6 kann noch ein Getriebe, insbesondere ein Planetengetriebe 24, angeordnet sein.

Das Zugmittelgetriebe 12 ist vorzugsweise ein Riemenantrieb, wobei die Antriebs- und Abtriebselemente aus Riemenscheiben 11 und 13 bestehen, über die ein oder mehrere Antriebsriemen 30 laufen, wobei die Antriebs- und Abtriebselemente aus Ritzeln bestehen. Grundsätzlich kann auch die Antriebseinrichtung hydraulisch oder elektrisch angetrieben sein.

Beim ersten Antriebsstrang I zum Antreiben des hydraulischen Antriebssystems 50 weist das Pumpenverteilgetriebe 16 zumindest eine hydraulische Pumpe 32 auf. Die zumindest eine hydraulische Pumpe 32 kann wiederum über Hydraulikleitungen 36 mit zumindest einem oder, wie im dargestellten Ausführungsbeispiel, mehreren hydraulischen Motoren 34 verbunden sein. Die hydraulischen Motoren 34 treiben jeweils eine, in Fig. 2 lediglich schematisch dargestellte Fahreinrichtung 2 an.

Aufgrund des hydraulischen Antriebssystems 50 kann die Vorschubgeschwindigkeit der Baumaschine prinzipiell unabhängig von der Drehzahl des Antriebsmotors gesteuert werden.

Mit der Pumpe 32 ist ein hydraulischer Tank 33 verbunden. Das Fördervolumen der Pumpe 32 ist einstellbar.

Auch die Schluckvolumen der hydraulischen Motoren 34, mit denen die Fahreinrichtungen 2 angetrieben werden sind einstellbar.

Die hydraulischen Motoren können vorzugsweise hydraulische Axialkolbenmotoren sein. Die hydraulische Pumpe kann eine hydraulische Axialkolbenpumpe sein.

Bei dem Betrieb einer Baumaschine 1 kann es zu Schwankungen in der Längsgeschwindigkeit der Baumaschine kommen. Diese Schwankungen können mit Hilfe einer Detektionseinrichtung 44 detektiert werden. In Abhängigkeit der detektierten Schwankung kann eine Steuereinheit 38 das Schluckvolumen des zumindest einen regelbaren Hydraulikmotors 34 verändern, so dass die Eigenfrequenz des hydraulischen Antriebssystems 50 der Baumaschine 1 verändert wird, wobei die Steuerungseinheit 38 abhängig von der Höhe der Verstellung des Schluckvolumens das Fördervolumen der Pumpe 32 derart anpasst, dass die vorgegebene Antriebsgeschwindigkeit konstant bleibt.

Die Eigenfrequenz, d.h. die ungedämpfte Eigenfrequenz des hydraulischen Antriebssystems 50 der Baumaschine 1, wird wie folgt bestimmt:

$$\omega_0 = \frac{V_M}{2\pi} \frac{1}{\sqrt{C'_h J_{ges}}}$$

Dabei ist $C'_h$ die hydraulische Kapazität, $J_{ges}$ das an den Hydraulikmotoren wirksame Massenträgheitsmoment, $V_M$ das Gesamt-Schluckvolumen der hydraulischen Motoren.

Die hydraulische Kapazität und die Massenträgheit der Straßenfräsmaschine sind bei bekannten Baumaschinen bekannte Größen bzw. können leicht bestimmt werden. Diese können auch durch Versuche ermittelt werden. Durch Verändern des Schluckvolumens wird die Eigenfrequenz des hydraulischen Antriebssystems verändert.

Schwankungen in der Antriebsgeschwindigkeit sind per se nicht störend. Erst wenn diese kontinuierliche Schwankung die Eigenfrequenz des hydraulischen Antriebssystems der Baumaschine 1 treffen, kommt es zu einem Aufschaukeln der Maschine. Dies ist für den Fahrkomfort sehr nachträglich. Dadurch, dass die Eigenfrequenz durch Anpassen des Schluckvolumens der hydraulischen Antriebsmotoren verändert wird, erfolgt kein Aufschaukeln der Maschine. Die Anpassung des Schluckvolumens erfolgt vorzugsweise dann, wenn die Amplitude der detektierten Schwingung der Antriebsgeschwindigkeit einen vorgegebenen Wert überschreitet.

Die hydraulischen Motoren 34 werden vorzugsweise im Betrieb maximal ausgeschwenkt betrieben. Zur Änderung der Eigenfrequenz werden die Hydraulikmotoren 34 vorzugsweise zurückgeschwenkt. Dies bedeutet, dass das Schluckvolumen vorzugsweise reduziert wird.

Gleichzeitig oder kurz danach wird jedoch das Fördervolumen der hydraulischen Pumpe 32 derart angepasst, dass die vorgegebene Antriebsgeschwindigkeit konstant bleibt.

Wenn das Schluckvolumen der hydraulischen Motoren vorzugsweise reduziert wird, würde sich, wenn die Durchflussmenge konstant bleiben würde, die Drehzahl der Hydraulikmotoren 34 erhöhen. Durch Reduzieren des Fördervolumens der Hydraulikpumpe 32 kann dies jedoch verhindert werden. Die Steuerungseinheit 38 steuert das hydraulische Antriebssystem 50 vorzugsweise derart, dass das Schluckvolumen des zumindest einen Hydraulikmotors 34 und das Fördervolumen der hydraulischen Pumpe 32 gleichzeitig angepasst werden.

Die Steuerungseinheit 38 kann ferner überprüfen, ob die detektierte Längsgeschwindigkeit nach dem Anpassen des Schluckvolumens und des Fördervolumens von der vorgegebenen Antriebsgeschwindigkeit abweicht. Die Steuerungseinheit kann dann bei Abweichungen das Fördervolumen der hydraulischen Pumpe 32 derart anpassen, bis die detektierte Längsgeschwindigkeit der vorgegebenen Antriebsgeschwindigkeit entspricht.

Da es sich bei dem System um ein nicht ideales System handelt, ergeben sich aufgrund von dem höheren Druck im hydraulischen Antriebssystem Verluste durch Leckagen, was dazu führt, dass die tatsächliche Längsgeschwindigkeit nicht der vorgegebenen Antriebsgeschwindigkeit entspricht. Diese Geschwindigkeitsverluste können dadurch ausgeglichen werden, dass das Fördervolumen der hydraulischen Pumpe 32 weiter angepasst wird. Um zu wissen, wie hoch die Anpassung des Fördervolumen der hydraulischen Pumpe 32 sein soll, kann die tatsächliche Längsgeschwindigkeit detektiert werden und mit der vorgegebenen Antriebsgeschwindigkeit verglichen werden, und abhängig davon, das Fördervolumen der hydraulischen Pumpe 32 angepasst werden, bis die tatsächliche Längsgeschwindigkeit der vorgegebenen Längsgeschwindigkeit entspricht.

Alternativ kann auch mittels Messeinrichtungen 70 der Druck im hydraulischen Antriebssystem gemessen werden. Es können in einer Datenspeichereinrichtung Daten hinterlegt sein, die beispielsweise Kennlinien zwischen dem Druck im Antriebssystem und Geschwindigkeitsverluste wiederspiegeln. Anhand dieser Kennlinien und dem gemessenen Druck kann dann das Fördervolumen des hydraulischen Antriebssystems 50 entsprechend angepasst werden. Es ist somit bei diesem Fall kein Messen der tatsächlichen Antriebsgeschwindigkeit nötig.

Messeinrichtungen 70 mit denen der Druck im hydraulischen Antriebssystem erfasst wird, können auch genutzt werden um das Überschreiten eines zulässigen Maximaldrucks zu erfassen. Sollte der Maximaldruck überschritten werden kann das Schluckvolumen der Motoren wieder erhöht werden um den Hydraulikdruck im System zu verringern, hierdurch kann es jedoch wieder zum Auftreten der unerwünschten Schwingungen kommen. Alternativ kann zur Reduzierung des Hydraulikdrucks die Fördermenge der Hydraulikpumpen reduziert werden, dies führt jedoch zu einer Verringerung der Längsgeschwindigkeit der Baumaschine 1.

Dass die Steuerungseinheit 38 das hydraulische Antriebssystem 50 über die Pumpe 32 steuert, ist mit der gestrichelten Linie 40 dargestellt. Auch die Messwerte der Detektionseinrichtung 44 können in die Steuerungseinheit 38 übermittelt werden. Dies ist ebenfalls mit einer gestrichelten Linie 45 dargestellt. Der Begriff "steuern" ist so zu verstehen, dass die Detektionseinrichtung 44 mindestens einmalig einen Messwert aufnimmt und die Steuerungseinheit 38 das hydraulische Antriebssystem 50 in Abhängigkeit der detektierten Schwankung steuert. Es soll aber auch umfasst sein, dass die Detektionseinrichtung mehrfach Messwerte aufnimmt und die Steuerungseinrichtung 38 das hydraulische Antriebssystem 50 in Abhängigkeit der detektierten Schwankung steuert. Eine Rückführung im Sinne einer Regelung soll somit auch bei dem vorliegenden Begriff "steuern" umfasst sein.

Die Detektionseinrichtung 44 kann die Schwankungen an den Fahreinrichtungen 2 und/oder an dem Maschinenrahmen und/oder als Schwankung des Volumenstroms und/oder als Schwankung des Drucks des hydraulischen Antriebssystems detektieren.

Im dargestellten Ausführungsbeispiel detektiert die Detektionseinrichtung 44 die Schwankungen des Volumenstroms und/oder die Schwankungen des Drucks in dem hydraulischen Antriebssystems 50. Die Detektionseinrichtung 44 kann die Schwankungen an jeglicher Stelle des Antriebssystems 50 messen, so z.B. an der hydraulischen Pumpe 32 oder an den Hydraulikleitungen 36. Dies ist ebenfalls mit gestrichelten Linien 41 dargestellt. Die Steuereinheit 38 kann Teil der Maschinensteuerung der Baumaschine 1 sein. Die Steuerungseinheit 38 kann jedoch auch separat ausgeführt sein.

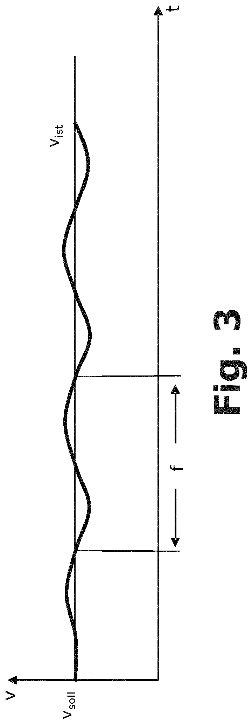

Fig. 3 zeigt die Längsgeschwindigkeit $v_{ist}$ über die Zeit. Die dargestellte detektierte Längsgeschwindigkeit weist Schwankungen auf, die um eine eingestellte Geschwindigkeit $v_{soll}$ schwanken kann. Die eingestellte Geschwindigkeit $v_{soll}$ ist die Geschwindigkeit, die der Fahrer an einer Bedieneinheit einstellen kann. Idealerweise entspriche die eingestellte Geschwindigkeit der vorgegeben Antriebsgeschwindigkeit $v_{Antrieb}$. Die detektierten Schwankungen können, wie dargestellt, eine Schwingung mit fester Frequenz f sein. Zu einem Aufschaukeln der Maschine kommt es häufig, wenn diese Frequenz f im Bereich der Resonanzfrequenz bzw. Eigenfrequenz des hydraulischen Antriebssystems der Baumaschine 1 liegen.

Bei dem bisherigen Stand der Technik konnte den Schwankungen nur entgegengewirkt werden, indem die eingestellte Geschwindigkeit $v_{soll}$ angepasst wurde, um die Vibration zu reduzieren, die das Aufschaukeln der Maschine bewirken. Dies hat jedoch den Nachteil, dass die Baumaschine insgesamt langsamer bewegt wird als grundsätzlich aufgrund der zur Verfügung stehenden Maschinenleistung möglich wäre.

Bei der vorliegenden Erfindung wird jedoch durch Verstellen des Schluckvolumens an den Hydraulikmotoren 34 die Eigenfrequenz des hydraulischen Antriebssystems 50 der Baumaschine 1 verändert. Auf diese Weise kann auch ein Aufschaukeln verhindert werden. Durch gleichzeitige oder nacheinander folgende Anpassung des Fördervolumens der hydraulischen Pumpe kann dafür gesorgt werden, dass die vorgegebene Antriebsgeschwindigkeit konstant bleibt.

Bei der Baumaschine in Fig. 1 sind noch zusätzliche oder alternative Detektionseinrichtungen dargestellt. Es ist eine als Beschleunigungsaufnehmer ausgeführte Detektionseinrichtung 60 und eine als Pickup-Sensor ausgeführte Detektionseinrichtung 62 dargestellt. Mit diesem können alternativ oder zusätzlich Schwankungen in der Längsgeschwindigkeit der Baumaschine 1 zuverlässig detektiert werden. Diese können jedoch auch weggelassen werden.

**Patentansprüche**

1. Selbstfahrende Baumaschine (1), insbesondere Straßenfräsmaschine, Recycler, Stabilisierer oder Surface Miner, mit

   - einem Maschinenrahmen (4),
   - zumindest drei Fahreinrichtungen (2),
   - zumindest einem hydraulischen Antriebssystem (50) zum Antreiben mindestens zweier Fahreinrichtungen (2), wobei das hydraulische Antriebssystem zumindest einen regelbaren Hydraulikmotor mit variablen Schluckvolumen und zumindest eine hydraulische Pumpe aufweist,
   - zumindest einer Arbeitseinrichtung, insbesondere einer Fräswalze (6), zum Bearbeiten des Bodenbelags (3),
   - wobei eine Detektionseinrichtung (44, 60, 62) vorgesehen ist, die bei Fortbewegung der Baumaschine (1) Schwankungen in der Längsgeschwindigkeit ($v_{ist}$) der Baumaschine (1) detektiert,

   **dadurch gekennzeichnet,**
   **dass** in Abhängigkeit der detektierten Schwankungen eine Steuerungseinheit (38) das Schluckvolumen des zumindest einen regelbaren Hydraulikmotors verändert, so dass die Eigenfrequenz des hydraulischen Antriebssystems der Baumaschine verändert wird, wobei die Steuerungseinheit (38) abhängig von der Höhe der Verstellung des Schluckvolumens ein Fördervolumen der Pumpe derart angepasst wird, dass eine vorgegebene Antriebsgeschwindigkeit konstant bleibt.

2. Baumaschine (1) nach Anspruch 1, **dadurch gekennzeichnet, dass** die Steuerungseinheit (38) zum Verändern der Eigenfrequenz der Baumaschine das Schluckvolumen des zumindest einen regelbaren Hydraulikmotors reduziert.

3. Baumaschine (1) nach Anspruch 1 oder 2, **dadurch gekennzeichnet, dass** die Schwankungen in der Längsgeschwindigkeit ($v_{ist}$) der Baumaschine (1) mittels der Dektektionseinrichtung (44, 60, 62) als Schwingung detektierbar ist, wobei diese Schwingung vorzugsweise eine im Wesentlichen feste Frequenz aufweist.

4. Baumaschine (1) nach einem der Ansprüche 1 bis 3, **dadurch gekennzeichnet, dass** die Steuerungseinheit das hydraulische Antriebssystem (50) derart steuert, dass das Schluckvolumen des zumindest einen Hydraulikmotors und das Fördervolumen der hydraulischen Pumpe gleichzeitig angepasst werden.

5. Baumaschine (1) nach einem der Ansprüche 1 bis 4, **dadurch gekennzeichnet, dass** die Steuerungseinheit überprüft, ob die detektierte Längsgeschwindigkeit ($v_{ist}$) von der vorgegebenen Antriebsgeschwindigkeit abweicht und die Steuerungseinheit bei Abweichung der detektierten Längsgeschwindigkeit von der vorgegebenen Antriebsgeschwindigkeit das Fördervolumen der hydraulischen Pumpe derart angepasst bis die detektierte Längsgeschwindigkeit ($v_{ist}$) der vorgegebenen Antriebsgeschwindigkeit entspricht.

6. Baumaschine (1) nach einem der Ansprüche 1 bis 4, **dadurch gekennzeichnet, dass** in einer Datenspeichereinrichtung Daten gespeichert sind, die den Zusammenhang zwischen Druck im hydraulischen Antriebssystem und Geschwindigkeitsverlusten darstellen, wobei zumindest eine Messeinrichtung zum Messen des Druck im hydraulischen Antriebssystem den Druck im hydraulischen Antriebssystem misst und wobei die Steuerungseinheit abhängig von dem gemessenen Druck das Fördervolumen der hydraulischen Pumpe derart angepasst, dass die Geschwindigkeitsverluste ausgeglichen werden und die Längsgeschwindigkeit ($v_{ist}$) der vorgegebenen Antriebsgeschwindigkeit entspricht.

7. Baumaschine (1) nach einem der Ansprüche 3 bis 6, **dadurch gekennzeichnet, dass** die Steuerungseinheit (38) das hydraulische Antriebssystem (50) derart steuert, dass das Schluckvolumen des zumindest einen regelbaren Hydraulikmotors erst dann verändert wird, wenn die detektierte Schwingung eine vordefinierte Amplitude überschreitet.

8. Baumaschine (1) nach einem der Ansprüche 1 bis 7, **dadurch gekennzeichnet, dass** die Detektionseinrichtung (44) Schwankungen der Längsgeschwindigkeit ($v_{ist}$) an den Fahreinrichtungen (2) und/oder an dem Maschinenrahmen und/oder als Schwankungen des Volumenstroms und/oder als Schwankungen des Drucks des hydraulischen Antriebssystems detektiert.

9. Baumaschine (1) nach Anspruch 8 **dadurch gekennzeichnet, dass** die Detektionseinrichtung (44) einen Pick-Up-Sensor und/oder einen Beschleunigungsaufnehmer zur Messung der Geschwindigkeitsänderungen und/oder eine Messeinrichtung zum Messen der Druckschwankungen oder des Volumenstroms im hydraulischen Antriebssystem umfasst.

10. Verfahren zum Bearbeiten von Bodenbelägen mit einer mit Hilfe von zumindest drei Fahreinrichtungen (2) selbstfahrenden Baumaschine (1), insbesondere Straßenfräsmaschine, Recycler, Stabilisierer oder Surface Miner, bei der mindestens zweier Fahreinrichtungen von zumindest einem hydraulischen Antriebssystem (50) angetrieben werden, wobei das hydraulische Antriebssystem zumindest einen regelbaren Hydraulikmotor mit variablen Schluckvolumen und zumindest eine hydraulische Pumpe aufweist, und wobei eine Arbeitseinrichtung, insbesondere eine Fräswalze (6), den Bodenbelag bearbeitet, wobei bei einer Fortbewegung der Baumaschine (1) Schwankungen in der Längsgeschwindigkeit ($v_{ist}$) der Baumaschine (1) mittels einer Detektionseinrichtung (44, 60, 62) detektiert werden **dadurch gekennzeichnet, dass** in Abhängigkeit der detektierten Schwankungen (38) das Schluckvolumen des zumindest einen regelbaren Hydraulikmotors derart mittels einer Steuerungseinheit (38) verändert wird, dass die Eigenfrequenz des hydraulischen Antriebssystems der Baumaschine verändert wird, wobei abhängig von der Höhe der Verstellung des Schluckvolumens das Fördervolumen der Pumpe derart mittels der Steuerungseinheit (38) angepasst wird, dass die vorgegebene Antriebsgeschwindigkeit konstant bleibt.

11. Verfahren nach Anspruch 10, **dadurch gekennzeichnet, dass** die Schwankungen in der Längsgeschwindigkeit ($v_{ist}$) der Baumaschine (1) als Schwingungen detektiert werden, wobei diese Schwingung vorzugsweise eine im Wesenlichen feste Frequenz aufweist.

12. Verfahren nach Anspruch 10 oder 11, **dadurch gekennzeichnet, dass** zum Verändern der Eigenfrequenz der Baumaschine das Schluckvolumen des zumindest einen regelbaren Hydraulikmotors reduziert wird.

13. Verfahren nach einem der Ansprüche 10 bis 12, **dadurch gekennzeichnet, dass** das Schluckvolumen des zumindest einen Hydraulikmotors und das Fördervolumen der hydraulischen Pumpe gleichzeitig angepasst werden.

14. Verfahren nach einem der Ansprüche 10 bis 13, **dadurch gekennzeichnet, dass** nach der Anpassung des Schluckvolumens und des Fördervolumens überprüft wird ob die detektierte Längsgeschwindigkeit ($v_{ist}$) von der vorgegebenen Antriebsgeschwindigkeit abweicht und bei Abweichung das Fördervolumen der hydraulischen Pumpe derart angepasst wird bis die detektierte Längsgeschwindigkeit ($v_{ist}$)

der vorgegebenen Antriebsgeschwindigkeit entspricht.

15. Verfahren nach einem der Ansprüche 10 bis 13, **dadurch gekennzeichnet, dass** nach der Anpassung des Schluckvolumens und des Fördervolumens der Druck im hydraulischen Antriebssystem überprüft wird und abhängig von dem Druck und abhängig von in einer Datenspeichereinrichtung hinterlegter Daten, die den Zusammenhang zwischen Druck im hydraulischen Antriebssystem und Geschwindigkeitsverlusten darstellen, das Fördervolumen derart angepasst wird, dass die Geschwindigkeitsverluste ausgeglichen werden.

**Claims**

1. A self-propelled construction machine (1), in particular road milling machine, recycler, stabilizer or surface miner, comprising

   - a machine frame (4),
   - at least three travelling devices (2),
   - at least one hydraulic drive system (50) for driving at least two travelling devices (2), wherein the hydraulic drive system comprises at least one controllable hydraulic motor with variable displacement volume and at least one hydraulic pump,
   - at least one working device, in particular a milling drum (6), for working the ground pavement (3),
   - wherein a detection device (44, 60, 62) is provided which detects fluctuations in the longitudinal speed ($v_{act}$) of the construction machine (1) during movement of the construction machine (1),

   **characterized in that**
   a control unit (38) alters the displacement volume of the at least one controllable hydraulic motor as a function of the detected fluctuations so that the natural frequency of the hydraulic drive system of the construction machine is altered, wherein the control unit (38) adjusts the discharge volume of the pump as a function of the amount of adjustment of the displacement volume in such a way that a specified drive speed remains constant.

2. The construction machine (1) in accordance with claim 1, **characterized in that** the control unit (38), for the purpose of altering the natural frequency of the construction machine, reduces the displacement volume of the at least one controllable hydraulic motor.

3. The construction machine (1) in accordance with claim 1 or 2, **characterized in that** the fluctuations in the longitudinal speed ($v_{act}$) of the construction machine (1) are detectable as a vibration by means of the detection device (44, 60, 62), wherein said vibration preferably exhibits an essentially fixed frequency.

4. The construction machine (1) in accordance with any one of the claims 1 to 3, **characterized in that** the control unit controls the hydraulic drive system (50) in such a way that the displacement volume of the at least one hydraulic motor and the discharge volume of the hydraulic pump are adjusted simultaneously.

5. The construction machine (1) in accordance with any one of the claims 1 to 4, **characterized in that** the control unit verifies as to whether the detected longitudinal speed ($v_{act}$) deviates from the specified drive speed, and the control unit, in the case of a deviation of the detected longitudinal speed from the specified drive speed, adjusts the discharge volume of the hydraulic pump in such a way until the detected longitudinal speed ($v_{act}$) corresponds to the specified drive speed.

6. The construction machine (1) in accordance with any one of the claims 1 to 4, **characterized in that** data are stored in a data storage device which show the correlation between the pressure in the hydraulic drive system and speed losses, wherein at least one measuring device for measuring the pressure in the hydraulic drive system measures the pressure in the hydraulic drive system, and wherein the control unit adjusts the discharge volume of the hydraulic pump as a function of the measured pressure in such a way that the speed losses are compensated for and the longitudinal speed ($v_{act}$) corresponds to the specified drive speed.

7. The construction machine (1) in accordance with any one of the claims 3 to 6, **characterized in that** the control unit (38) controls the hydraulic drive system (50) in such a way that the displacement volume of the at least one controllable hydraulic motor is altered only when the detected vibration exceeds a predefined amplitude.

8. The construction machine (1) in accordance with any one of the claims 1 to 7, **characterized in that** the detection device (44) detects fluctuations in the longitudinal speed ($v_{act}$) on the travelling devices (2) and/or on the machine frame and/or as a fluctuation in the volumetric flow rate and/or as a fluctuation in the pressure of the hydraulic drive system.

9. The construction machine (1) in accordance with claim 8, **characterized in that** the detection device (44) comprises a pick-up sensor and/or an accelerometer for measuring the speed changes and/or a measuring device for measuring the fluctuations in pressure or the volumetric flow rate in the hydraulic drive system.

10. A method for working ground pavements using a construction machine (1) self-propelled by means of at least three travelling devices (2), in particular, road milling machine, recycler, stabilizer or surface miner, in which at least two travelling devices are driven by a hydraulic drive system (50), wherein the hydraulic drive system comprises at least one controllable hydraulic motor with variable displacement volume and at least one hydraulic pump, and wherein a working device, in particular a milling drum (6), works the ground pavement, wherein during movement of the construction machine (1), fluctuations in the longitudinal speed ($v_{act}$) of the construction machine (1) are detected by means of a detection device (44, 60, 62), **characterized in that**
the displacement volume of the at least one controllable hydraulic motor is altered by means of a control unit (38), as a function of the detected fluctuations, in such a way that the natural frequency of the hydraulic drive system of the construction machine is altered, wherein the discharge volume of the pump is adjusted by means of the control unit (38), as a function of the amount of adjustment of the displacement volume, in such a way that the specified drive speed remains constant.

11. The method in accordance with claim 10, **characterized in that** the fluctuations in the longitudinal speed ($v_{act}$) of the construction machine (1) are detected as vibrations, wherein said vibration preferably exhibits an essentially fixed frequency.

12. The method in accordance with claim 10 or 11, **characterized in that**, for the purpose of altering the natural frequency of the construction machine, the displacement volume of the at least one controllable hydraulic motor is reduced.

13. The method in accordance with any one of the claims 10 to 12, **characterized in that** the displacement volume of the at least one hydraulic motor and the discharge volume of the hydraulic pump are adjusted simultaneously.

14. The method in accordance with any one of the claims 10 to 13, **characterized in that**, after adjusting the displacement volume and the discharge volume, it is verified as to whether the detected longitudinal speed ($v_{act}$) deviates from the specified drive speed and, in the case of a deviation, the discharge volume of the hydraulic pump is adjusted in such a way until the detected longitudinal speed ($v_{act}$) corresponds to the specified drive speed.

15. The method in accordance with any one of the claims 10 to 13, **characterized in that**, after adjusting the displacement volume and the discharge volume, the pressure in the hydraulic drive system is verified and, as a function of the pressure and as a function of data stored in a data storage device which show the correlation between the pressure in the hydraulic drive system and speed losses, the discharge volume adjusted in such a fashion that the speed losses are compensated for.

**Revendications**

1. Engin de chantier automoteur (1), en particulier fraiseuse routière, recycleur, stabilisatrice ou surface miner, doté

   - d'un châssis de machine (4),
   - d'au moins trois dispositifs de conduite (2),
   - d'au moins un système d'entraînement hydraulique (50) destiné à l'entraînement des au moins deux dispositifs de conduite (2), dans lequel le système d'entraînement hydraulique comporte au moins un moteur hydraulique réglable avec un volume d'absorption variable et au moins une pompe hydraulique,
   - d'au moins un dispositif de travail, en particulier d'un tambour de fraisage (6), destiné au traitement du revêtement de sol (3),
   - dans lequel un dispositif de détection (44, 60, 62) est prévu, lequel détecte des fluctuations dans la vitesse longitudinale ($v_{ist}$) de l'engin de chantier (1) lors de la locomotion de l'engin de chantier (1),

   **caractérisé en ce que**,
   en fonction des fluctuations détectées, une unité de commande (38) modifie le volume d'absorption de l'au moins un moteur hydraulique réglable, de sorte que la fréquence propre du système d'entraînement hydraulique est modifiée, dans lequel l'unité de commande (38) ajuste un volume de refoulement de la pompe en fonction de la hauteur du réglage du volume d'absorption de telle sorte qu'une vitesse d'entraînement prédéfinie reste constante.

2. Engin de chantier (1) selon la revendication 1, **caractérisé en ce que** l'unité de commande (38) réduit le volume d'absorption de l'au moins un moteur hydraulique réglable afin de modifier la fréquence propre de l'engin de chantier.

3. Engin de chantier (1) selon la revendication 1 ou 2, **caractérisé en ce que** les fluctuations dans la vitesse longitudinale ($v_{ist}$) de l'engin de chantier (1) sont détectables comme une vibration au moyen du dispositif de détection (44, 60, 62), dans lequel cette vibration comporte de préférence une fréquence sensiblement fixe.

4. Engin de chantier (1) selon l'une des revendications 1 à 3, **caractérisé en ce que** l'unité de commande commande le système d'entraînement hydraulique (50) de telle sorte que le volume d'absorption de l'au moins un moteur hydraulique et le volume de refoulement de la pompe hydraulique sont ajustés simultanément.

5. Engin de chantier (1) selon l'une des revendications 1 à 4, **caractérisé en ce que** l'unité de commande vérifie si la vitesse longitudinale détectée ($v_{ist}$) dévie de la vitesse d'entraînement prédéfinie et l'unité de commande ajuste le volume de refoulement de la pompe hydraulique en cas de déviation de la vitesse longitudinale détectée par rapport à la vitesse d'entraînement prédéfinie jusqu'à ce que la vitesse longitudinale détectée ($v_{ist}$) corresponde à la vitesse d'entraînement prédéfinie.

6. Engin de chantier (1) selon l'une des revendications 1 à 4, **caractérisé en ce que** des données sont enregistrées dans un dispositif de mémoire de données, lesquelles représentent la relation entre la pression dans le système d'entraînement hydraulique et les pertes de vitesse, dans lequel au moins un dispositif de mesure, destiné à mesurer la pression dans le système d'entraînement hydraulique, mesure la pression dans le système d'entraînement hydraulique et dans lequel l'unité de commande ajuste le volume d'absorption de l'au moins un moteur hydraulique en fonction de la pression mesurée de telle sorte que les pertes de vitesse sont compensées et la vitesse longitudinale ($v_{ist}$) correspond à la vitesse d'entraînement prédéfinie.

7. Engin de chantier (1) selon l'une des revendications 3 à 6, **caractérisé en ce que** l'unité de commande (38) commande le système d'entraînement hydraulique (50) de telle sorte que le volume d'absorption de l'au moins un moteur hydraulique réglable n'est modifié que lorsque la vibration détectée dépasse une amplitude prédéfinie.

8. Engin de chantier (1) selon l'une des revendications 1 à 7, **caractérisé en ce que** le dispositif de détection (44) détecte des fluctuations de la vitesse longitudinale ($v_{ist}$) sur les dispositifs de conduite (2) et/ou sur le châssis de machine et/ou comme fluctuations du débit volumique et/ou comme fluctuations de la pression du système d'entraînement hydraulique.

9. Engin de chantier (1) selon la revendication 8, **caractérisé en ce que** le dispositif de détection (44) comprend un capteur Pick up et/ou un accéléromètre destiné à mesurer les modifications de vitesse et/ou un dispositif de mesure destiné à mesurer les fluctuations de pression ou le débit volumique dans le système d'entraînement hydraulique.

10. Procédé de traitement de revêtements de sol avec un engin de chantier (1) automoteur à l'aide d'au moins trois dispositifs de conduite (2), en particulier fraiseuse routière, recycleur, stabilisatrice ou surface miner, dans lequel au moins deux dispositifs de conduite sont entraînés par au moins un système d'entraînement hydraulique (50), dans lequel le système d'entraînement hydraulique comporte au moins un moteur hydraulique réglable avec un volume d'absorption variable et au moins une pompe hydraulique, et dans lequel un dispositif de travail, en particulier un tambour de fraisage (6), traite le revêtement de sol, dans lequel des fluctuations dans la vitesse longitudinale ($v_{ist}$) de l'engin de chantier (1) sont détectées par un dispositif de détection (44, 60, 62) lors d'une locomotion de l'engin de chantier (1)
**caractérisé en ce que**,
en fonction des fluctuations détectées (38), le volume d'absorption de l'au moins un moteur hydraulique réglable est modifié au moyen d'une unité de commande (38) de telle sorte que la fréquence propre du système d'entraînement hydraulique de l'engin de chantier est modifiée, dans lequel le volume de refoulement de la pompe est ajusté en fonction de la hauteur du réglage du volume d'absorption au moyen de l'unité de commande (38) de telle sorte que la vitesse d'entraînement prédéfinie reste constante.

11. Procédé selon la revendication 10, **caractérisé en ce que** les fluctuations dans la vitesse longitudinale ($v_{ist}$) de l'engin de chantier (1) sont détectées comme vibrations, dans lequel cette vibration présente de préférence une fréquence sensiblement fixe.

12. Procédé selon la revendication 10 ou 11, **caractérisé en ce que** le volume d'absorption de l'au moins un moteur hydraulique réglable est réduit afin de modifier la fréquence propre de l'engin de chantier.

13. Procédé selon l'une des revendications 1 à 12, **caractérisé en ce que** le volume d'absorption de l'au moins un moteur hydraulique et le volume de refoulement de la pompe hydraulique sont ajustés simultanément.

14. Procédé selon l'une des revendications 10 à 13, **caractérisé en ce qu'**après l'ajustement du volume d'absorption et du volume de refoulement il est vérifié que la vitesse longitudinale détectée ($v_{ist}$) ne dévie pas de la vitesse d'entraînement prédéfinie et en cas de déviation le volume de refoulement de la pompe hydraulique est ajusté jusqu'à ce que la vitesse longitudinale détectée ($v_{ist}$) corresponde à la vitesse d'entraînement prédéfinie.

15. Procédé selon l'une des revendications 10 à 13, **caractérisé en ce qu'**après l'ajustement du volume d'absorption et du volume de refoulement, la pression dans le système d'entraînement hydraulique est vérifiée et en fonction de la pression et en fonction de données déposées dans un dispositif de mémoire de données, lesquelles représentent la relation entre la pression dans le système d'entraînement hydraulique et les pertes de vitesse, le volume de refoulement est ajusté de telle sorte que les pertes de vitesse sont compensées.

Fig. 1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03064770 A
- EP 2644775 A2